# FASCICULE DE BREVET EUROPEEN

(11) **EP 2 535 990 B1**
(45) Date de publication et mention de la délivrance du brevet: **14.09.2016**
(21) Numéro de dépôt: 12172048.6
(22) Date de dépôt: 14.06.2012
(51) Int. Cl.: H02B 1/052

(54) **Appareil électrique à fixer par encliquetage sur un rail de support horizontal**
Elektrogerät zum Befestigen durch Einrasten auf einer waagrechten Halterungsschiene
Electrical appliance to be attached by snap fitting to a horizontal support rail

(30) Priorité: 15.06.2011 FR 1155243
(43) Date de publication de la demande: 19.12.2012
(73) Titulaire: Legrand France, 87000 Limoges (FR); Legrand SNC, 87000 Limoges (FR)
(72) Inventeur: Pujol, Bruno, 06580 Pegomas (FR)
(74) Mandataire: Santarelli

(56) Documents cités:
- EP-A1- 0 342 070
- EP-A1- 0 690 537
- EP-A1- 1 378 965
- DE-U1- 8 624 150
- US-A1- 2008 092 604

## Description

### DOMAINE DE L'INVENTION

L'invention a trait aux appareils électriques à fixer par encliquetage sur un rail de support horizontal présentant une aile supérieure et une aile inférieure.

### ARRIERE PLAN TECHNOLOGIQUE

En général, de tels appareils électriques présentent sur une face arrière un bec supérieur et un bec inférieur en regard l'un de l'autre et sont configurés pour être fixés au rail avec l'aile supérieure engagée entre le bec supérieur et le corps de l'appareil et avec l'aile inférieure engagée entre le bec inférieur et le corps de l'appareil, le bec inférieur étant élastiquement rétractable pour permettre la fixation de l'appareil sur le rail par encliquetage.

On connaît déjà, notamment par la demande de brevet français 2 652 205, un tel appareil où le bec inférieur est formé par une extrémité d'un coulisseau monté sur le corps de l'appareil, sollicité par un ressort vers une position de service où le bec inférieur est saillant, ce coulisseau présentant en saillie de la face inférieure de l'appareil, une patte de manoeuvre pour entraîner le coulisseau dans une position où le bec inférieur est rétracté dans le corps de l'appareil. L'abaissement du bec inférieur grâce à la patte de manoeuvre permet de libérer l'appareil du rail. Pour faciliter la libération de l'appareil dans certaines circonstances, en particulier lorsque l'appareil appartient à une rangée d'appareils semblables alimentés par un peigne de distribution d'énergie électrique disposé en haut de la rangée, le bec supérieur est formé par l'une des extrémités d'un talon dont l'autre extrémité forme une patte de manoeuvre saillant au-dessus de la face supérieure, ce talon admettant une position de service où il est immobilisé par rapport au corps de l'appareil avec le bec supérieur qui est saillant tandis qu'il est possible de mettre le talon, en exerçant un effort dirigé vers le haut sur la patte de manoeuvre, dans une position effacée où le bec supérieur est rétracté dans le corps de l'appareil.

On connaît également, notamment par la demande de brevet allemand DE 41 07 075, par la demande de brevet allemand DE 44 39 672 et par la demande de brevet européen EP 1 058 360, d'autres appareils dans lesquels le bec inférieur fait partie d'une griffe admettant une position de service pour la fixation de l'appareil sur le rail et une position effacée pour la libération de l'appareil dudit rail, position effacée dans laquelle la griffe est abaissée par rapport à la position de service. La position effacée de la griffe est particulièrement utile dans les pays, tels que l'Allemagne, dans lesquels la pratique est d'alimenter les différents appareils fixés côte à côte sur le rail par un peigne de distribution d'énergie électrique disposé horizontalement sous les appareils avec les dents du peigne engagées chacune dans une fente étroite ménagée dans la face inférieure des appareils pour rejoindre une borne de raccordement interne à l'appareil. Un tel peigne est en général rigide, de sorte que pour libérer l'un des appareils de la rangée, sans démonter le peigne, il est nécessaire de pouvoir élever l'appareil par rapport au peigne de la hauteur des dents. Du fait que l'orifice par lequel chaque dent du peigne pénètre dans l'appareil est une fente étroite dont la largeur correspond à la largeur des dents du peigne, il n'est pas possible de faire avancer l'appareil pour le libérer de l'aile inférieure du rail, quand la griffe est en position de service. La position abaissée de la griffe permet d'élever l'appareil de la quantité voulue sans être gêné par le rail de fixation. Le document US 2008 092604 décrit un appareil électrique à fixer par encliquetage sur un rail support avec une cloison d'interception qui guide un outil d'entrainêment.

### OBJET DE L'INVENTION

L'invention vise à fournir un appareil semblable, c'est-à-dire avec au moins un membre de manoeuvre d'un bec, mais à commodité d'emploi améliorée.

L'invention propose à cet effet un appareil à fixer par encliquetage sur un rail de support horizontal présentant une aile supérieure et une aile inférieure, lequel appareil a une forme globalement parallélépipédique avec deux faces principales et des faces latérales s'étendant de l'une à l'autre des faces principales, respectivement une face arrière, une face inférieure, une face avant et une face supérieure, ladite face arrière présentant un bec supérieur et un bec inférieur en regard l'un de l'autre, ledit appareil étant configuré pour être fixé audit rail avec ladite aile supérieure engagée entre le bec supérieur et le corps de l'appareil et avec ladite aile inférieure engagée entre le bec inférieur et le corps de l'appareil, ledit bec inférieur étant élastiquement rétractable pour permettre la fixation de l'appareil sur le rail par encliquetage, au moins un desdits bec supérieur et bec inférieur étant associé à un membre de manoeuvre en saillie de la face latérale supérieure ou inférieure correspondante pour élever le bec supérieur ou abaisser le bec inférieur afin de libérer ledit appareil dudit rail ; caractérisé en ce que le corps dudit appareil comporte une cloison d'interception en saillie de ladite face latérale correspondante, s'étendant dans le sens de la largeur, c'est-à-dire suivant la direction gauche-droite, jusqu'à une extrémité située en avant du membre de manoeuvre au droit du bord latéral du membre de manoeuvre, c'est-à-dire le bord gauche ou le bord droit, qui est du côté de la cloison d'interception, grâce à quoi la cloison d'interception peut guider vers le membre de manoeuvre un outil d'entraînement du membre de manoeuvre, par glissement de l'extrémité de l'outil le long de la cloison d'interception.

L'accès au membre de manoeuvre est ainsi simple et commode, en particulier lorsqu'est présent en avant du membre de manoeuvre un peigne de distribution d'énergie électrique qui masque ce membre de manoeuvre.

Selon des caractéristiques préférées comme étant favorables à la commodité d'emploi de l'appareil selon l'invention, tout en étant simples et économiques à mettre en oeuvre :
- ladite cloison d'interception est au moins aussi large que ledit membre de manoeuvre ;
- ladite cloison d'interception a une hauteur semblable à la hauteur dudit membre de manoeuvre ;
- ladite cloison d'interception est en arrière de chaque orifice d'accès à une borne de raccordement que présente ladite face latérale correspondante ;
- ladite cloison d'interception se raccorde, par ladite extrémité, à une cloison de calage qui s'étend dans le sens de la profondeur jusqu'audit membre de manoeuvre ;
- le corps de l'appareil comporte en saillie de ladite face latérale correspondante, en regard de ladite cloison de calage, une autre cloison de calage qui s'étend vers l'avant, à partir d'un bord latéral opposé dudit membre de commande ;
- le membre de manoeuvre est disposé au voisinage de l'une desdites faces principales, avec ladite autre cloison de calage disposée du côté de cette face principale ;
- l'appareil comporte deux dits becs supérieurs ou deux dits becs inférieurs chacun associé à un dit membre de manoeuvre, chaque dit membre de manoeuvre étant disposé au voisinage d'une respective desdites faces principales ;
- l'appareil comporte une dite cloison d'interception unique et continue entre deux dites extrémités ;
- l'appareil comporte deux dites cloisons d'interception disjointes situées respectivement à gauche et à droite d'une interruption centrale, chaque dite cloison d'interception s'étendant de l'interruption centrale jusqu'à une respective dite extrémité ;
- chaque dite cloison d'interception disjointe est orientée dans le sens de la largeur avec une inclinaison vers l'arrière et vers le membre de manoeuvre situé du même côté ;
- ledit membre de manoeuvre est une patte de manoeuvre présentant une ouverture ou empreinte pour recevoir ledit outil afin que ladite patte de manoeuvre soit entraînée vers le haut ou vers le bas ;
- ledit membre de manoeuvre est une touche configurée pour être entraînée vers l'arrière par appui dudit outil ;
- ladite touche appartient à une griffe présentant en arrière de ladite touche une traverse à section en U ; et/ou
- l'appareil comporte deux dits becs supérieurs et deux dits becs inférieurs chacun associé à un dit membre de manoeuvre.

### BREVE DESCRIPTION DES DESSINS

L'exposé de l'invention sera maintenant poursuivi par la description détaillée d'exemples de réalisation, donnée ci-après à titre illustratif et non limitatif, en référence aux dessins annexés, sur lesquels :
- la figure 1 est une vue en élévation de côté montrant un appareil utile à l'intelligence de l'invention fixé sur un rail de support ;
- la figure 2 est une vue semblable à la figure 1, mais avec la griffe de fixation qui est en position effacée et l'appareil qui est libéré du rail de support et du peigne de distribution d'énergie électrique ;

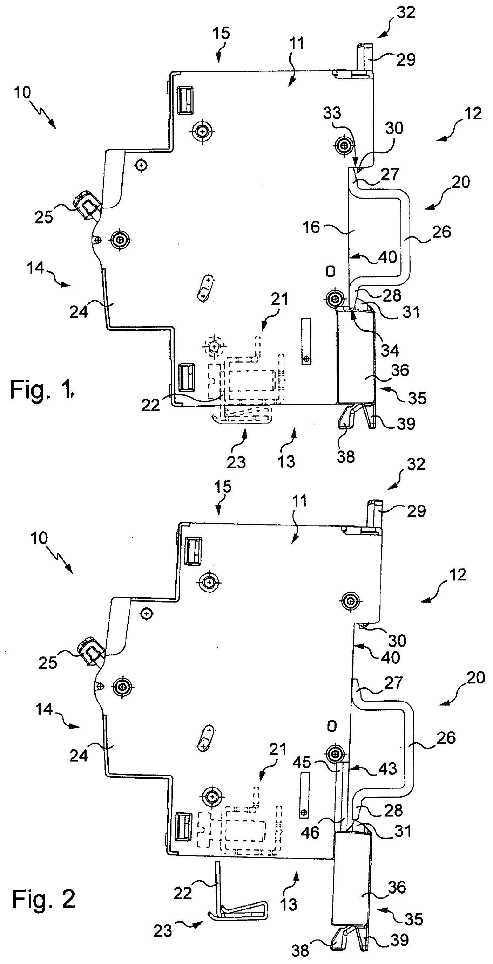

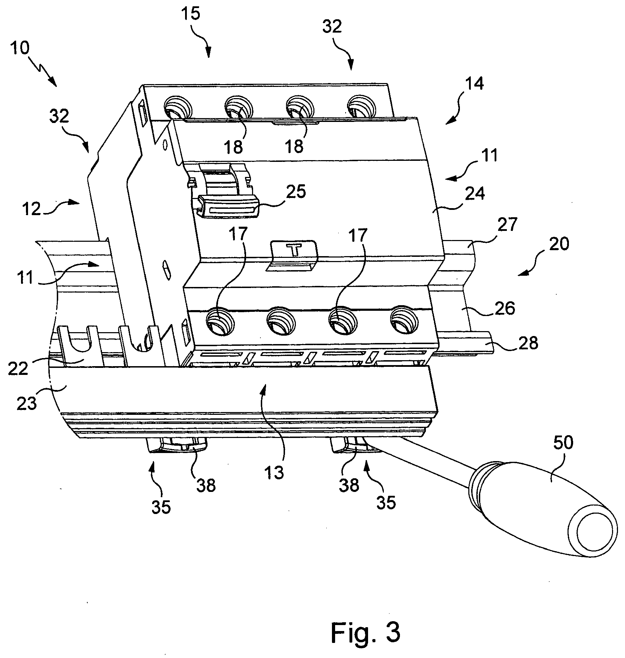

- la figure 3 est une vue en perspective d'un autre appareil utile à l'intelligence de l'invention, semblable à celui illustré sur les figures 1 et 2 mais quatre fois plus large, montré dans une configuration semblable à celle de la figure 1, c'est-à-dire avec l'appareil qui est fixé sur un rail de support et qui est en prise avec un peigne de distribution d'énergie électrique, la figure 3 montrant également un tournevis utilisé pour appuyer sur la touche de l'une de deux griffes de fixation que comporte cet appareil afin de faire passer cette griffe de sa position de service à sa position effacée ;
- la figure 4 est une vue en perspective semblable à la figure 3, mais prise sous un autre angle et montrant un appareil conforme à l'invention ;
- la figure 5 est un agrandissement du détail repéré par V sur la figure 4 ;
- la figure 6 est une vue en perspective de l'appareil illustré sur les figures 4 et 5 mais prise sous un autre angle et dans une configuration où le peigne de distribution d'énergie électrique est en haut plutôt qu'en bas ;
- la figure 7 est un agrandissement du détail repéré par VII sur la figure 6 ; et
- les figures 8 à 11 sont des vues semblables aux figures 4 à 7 pour une variante de l'appareil électrique conforme à l'invention.

### DESCRIPTION DETAILLEE D'EXEMPLES DE REALISATION

On va tout d'abord décrire l'appareil électrique 10 illustré sur les figures 1 et 2.

Cet appareil 10 a une forme globalement parallélépipédique. Il présente deux faces principales 11 et des faces latérales s'étendant de l'une à l'autre des faces principales 11, à savoir une face arrière 12, une face inférieure 13, une face avant 14 et une face supérieure 15.

La face arrière 12 présente une échancrure 16 pour le montage de l'appareil 1 sur un rail de support normalisé à profil en Ω tel que le rail 20.

La face inférieure 13 présente des orifices d'accès (non représentés sur les figures 1 et 2) à une borne de raccordement 21. Ici, la borne 21 accueille une dent 22 d'un peigne 23 de distribution d'énergie électrique.

L'orifice de la face inférieure 13 par lequel la dent 22 est introduite dans l'appareil 10 est une fente étroite dont la largeur (dimension suivant la direction avant-arrière) est légèrement supérieure à l'épaisseur de la dent 22.

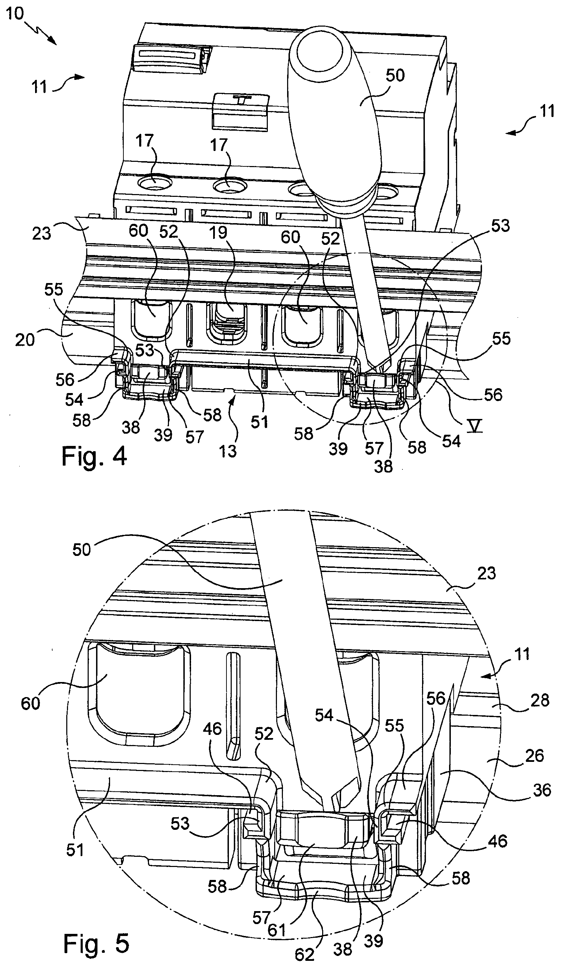

La face inférieure 13 présente, en arrière de l'orifice par lequel est introduite la dent 22, un autre orifice d'accès à la borne 21, relativement étendu suivant la direction avant-arrière, permettant d'accueillir l'extrémité dénudée d'un câble électrique (voir sur la figure 4 les orifices 19 de l'appareil 10 illustré sur les figures 4 à 7).

La face avant 14 présente, en position centrale, sur à peu près la moitié de sa longueur, un nez 24 présentant un levier de manoeuvre 25. Sous le nez 24 se trouve un orifice permettant d'accéder à la tête de la vis de la borne 21 (voir les orifices 17 de l'appareil 10 illustrés sur la figure 3).

La face supérieure 15 présente un orifice (non représenté) donnant accès à une borne de raccordement (non représentée) semblable à la borne 21. Ici, cette borne accueille l'extrémité dénudée d'un câble électrique (non représenté) de départ vers un circuit divisionnaire tel qu'un circuit d'éclairage ou un circuit de prises de courant.

Au-dessus du nez 24 se trouve un orifice permettant d'accéder à la tête de la vis de la borne située sous la face supérieure 15 (voir les orifices 18 de l'appareil 10 illustré sur la figure 3).

L'orifice de la face supérieure 15 par lequel l'extrémité dénudée du câble électrique de départ est introduite dans l'appareil 10 est relativement étendu suivant la direction avant-arrière.

Ici, l'appareil 10 est du type modulaire, c'est-à-dire qu'outre sa forme globalement parallélépipédique, sa largeur (distance entre les deux faces principales 11) est un multiple d'une valeur normalisée, connue sous le nom de « module », qui est de l'ordre de 18 mm.

Plus précisément, ici, l'appareil 10 est un disjoncteur unipolaire d'une largeur de un module.

Le rail 20 présente une portion centrale 26 en forme de canal ainsi qu'une aile 27 et une aile 28 qui saillent chacune d'une extrémité respective de la portion centrale 26, vers l'extérieur. Les ailes 27 et 28 sont globalement orientées suivant un même plan.

Le rail 20 est prévu pour être fixé horizontalement sur une paroi, appartenant par exemple à une enveloppe telle qu'un coffret électrique ou une armoire électrique. A l'état fixé, les ailes 27 et 28 sont prévues pour être orientées verticalement, avec la portion centrale 26 en arrière des ailes 27 et 28 et en appui sur la paroi de support. Sur les figures 1 et 2, l'aile 27 est l'aile supérieure et l'aile 28 est l'aile inférieure.

Pour la fixation de l'appareil 10 sur le rail de support 20, l'appareil 10 présente deux becs 30 et 31.

Le bec 30 est formé par l'une des extrémités d'un talon 32 dont l'autre extrémité forme une patte de manoeuvre 29 saillant au-dessus de la face supérieure 15 de l'appareil 10. De façon bien connue (voir par exemple la demande de brevet français 2 652 205), le talon 32 admet une position de service (position illustrée sur les figures 1 et 2 ) où il est immobilisé par rapport au corps de l'appareil 10 avec le bec 30 qui est saillant du bord supérieur 33 de l'échancrure 16 ; et il est possible de mettre le talon 32, en exerçant un effort dirigé vers le haut sur la patte de manoeuvre 29, dans une position effacée où le bec 30 est rétracté dans le corps de l'appareil 10.

Pour remettre le talon 32 dans la position de service, il suffit d'exercer sur la patte de manoeuvre 29 un effort dirigé vers le bas, le talon 32 se bloquant automatiquement vis-à-vis du corps de l'appareil 10 lorsque la position de service est atteinte.

Le bec 31 appartient à une griffe 35.

La griffe 35 comporte un chariot 36 monté coulissant sur le corps de l'appareil 10, un coulisseau (non visible à part le bec 31) monté coulissant dans le chariot 36 et un ressort (non visible) pour solliciter le coulisseau vers une position déployée où une extrémité du coulisseau, formant le bec 31, saille du bord supérieur 34 du chariot 36. Le coulisseau est rétractable, à l'encontre du ressort, dans le chariot 36.

La griffe 35 admet une position de service, illustrée sur la figure 1, où le chariot 36 est immobilisé par rapport au corps de l'appareil 10 avec le bord supérieur 34 du chariot 36 qui forme le bord inférieur de l'échancrure 16.

La griffe 35 admet également une position effacée, illustrée sur la figure 2, dans laquelle la griffe 35 est abaissée par rapport à sa position de service.

La griffe 35 comporte en partie inférieure une touche 38 permettant, lorsque la griffe 35 est en position de service, de débloquer le chariot 36 vis-à-vis du corps de l'appareil 10. Une fois débloqué, le chariot 36 peut coulisser vis-à-vis du corps de l'appareil 10 jusqu'à la position effacée illustrée sur la figure 2, qui est une position de fin de course du chariot 36.

Le chariot 36 présente, en arrière de la touche 38, une traverse inférieure 39. Lorsque la griffe 35 est en position de service (figure 1), la touche 38 peut se déplacer vers l'arrière jusqu'à ce qu'elle rencontre la traverse inférieure 39, qui forme une butée de fin de course.

Pour remettre la griffe 35 en position de service, il suffit de la faire coulisser vis-à-vis du corps de l'appareil 10 vers le haut, le chariot 10 se bloquant automatiquement vis-à-vis du corps de l'appareil 10 lorsque la position de service est atteinte.

Ainsi qu'on le voit sur la figure 2, la surface 40 du corps de l'appareil 10 qui forme le fond de l'échancrure 16 se prolonge par une surface 43 qui s'étend de la surface 40 jusqu'à la face inférieure 13.

Dans chacune des faces principales 11, le long de la surface 43, est ménagée une rainure 45 débouchant dans la face inférieure 13.

Entre chaque rainure 45 et la surface 43, il existe une nervure 46 dont la tranche est en retrait par rapport à la face principale 11. Les nervures 46 servent au guidage du chariot 36.

L'écart entre la tranche de la nervure 46 et la face principale 11 permet aux faces latérales du chariot 36 d'être en léger retrait par rapport à la face principale 11. Cela permet au chariot 36 de coulisser y compris lorsque l'appareil 10 fait partie d'une rangée d'appareils avec chaque face principale 11 de l'appareil 10 qui est contre une face principale d'un appareil voisin.

Ainsi qu'on le voit sur la figure 1, l'appareil 10 est configuré pour être fixé au rail 20 avec le talon 32 et la griffe 35 en position de service, l'aile supérieure 27 étant engagée entre le bec 30 et le corps de l'appareil 10 ; et l'aile inférieure 28 engagée entre le bec 31 et le corps de l'appareil 10.

Plus précisément, l'aile supérieure 27 est prise en sandwich entre le bec 30 et la surface 40 du corps de l'appareil 10 qui délimite le fond de l'échancrure 16, la tranche de l'aile supérieure 27 est en regard du bord supérieur 33 de l'échancrure 16, l'aile inférieure 28 est prise en sandwich entre le bec 31 et la surface de fond 40, et la tranche de l'aile inférieure 28 est en regard du bord inférieur de l'échancrure 16, formé ici par le bord supérieur 34 du chariot 36.

La fixation de l'appareil 10 sur le rail 20 se fait par encliquetage.

Plus précisément, l'appareil 10 est configuré pour être fixé au rail de support 20 par engagement de l'aile supérieure 27 entre le corps de l'appareil 10 et le bec 30 alors que l'appareil 10 est incliné pour que le bec 31 soit éloigné de l'aile inférieure 28, puis par basculement de l'appareil 10 autour de l'aile supérieure 27 pour rapprocher le bec 31 de l'aile inférieure 28, le bec 31 se rétractant au contact de l'aile inférieure 28 pour permettre à l'aile inférieure 28 de franchir le bec 31 puis le bec 31 se déploie pour que l'aile inférieure 28 soit retenue entre le corps de l'appareil 10 et le bec 31.

L'appareil 10 est prévu pour être disposé avec d'autres appareils électriques modulaires sur le rail de support 20, pour former une rangée d'appareils électriques côte à côte.

Le peigne 23 de distribution horizontale d'énergie électrique sert à alimenter l'appareil 10 et les autres appareils de la rangée.

Pour ce faire, le peigne 23 présente une pluralité de dents telle que la dent 22 chacune engagée dans un appareil tel que l'appareil 10.

Pour extraire l'appareil 10, il faut le libérer du rail 20 et du peigne 23.

La rétractation de l'un ou l'autre ou des deux becs 30 et 31 permet de libérer l'appareil 10 du rail 20 mais vu la longueur de la dent 22 et le caractère étroit de l'orifice par lequel la dent 22 est introduite dans l'appareil 10, cela n'est pas suffisant pour libérer l'appareil 10 du peigne 23, du fait de la rigidité d'un tel peigne et de la fixation de ce peigne aux autres appareils de la rangée.

Grâce au caractère effaçable de la griffe 35 à laquelle appartient le bec 31, l'appareil 10 peut être enlevé de la rangée d'appareils sans qu'il soit nécessaire de démonter le peigne 23 de la rangée d'appareils.

Dans la position effacée de la griffe 35 (figure 2), l'écart entre les becs 30 et 31 est tel que l'appareil 10 peut être suffisamment soulevé, par rapport au peigne 23, pour que la dent 22 soit entièrement sortie de l'appareil 10 et qu'en conséquence l'appareil 10 soit à la fois libéré du rail 20 et du peigne 23, ainsi que montré sur la figure 2.

Dans le détail, les opérations à effectuer pour pouvoir enlever l'appareil 10 de la rangée d'appareils sont les suivantes :
- desserrage de la borne de raccordement 21 et de la borne de raccordement (non représenté) située sous la face supérieure 15 ;
- extraction hors de l'appareil 10 du câble électrique qui était raccordé à la borne située sous la face supérieure 15 (le caractère déformable d'un câble électrique permet cette extraction) ;
- appui sur la touche 38 de la griffe 35 et déplacement de la griffe 35 pour l'amener à sa position effacée illustrée sur la figure 2 ; et
- soulèvement de l'appareil 10 en l'inclinant légèrement pour le libérer à la fois du rail 20 et du peigne 23.

On notera que l'alimentation de la rangée d'appareils par un peigne tel que le peigne 23 situé sous les appareils, avec une fente étroite prévue dans chaque appareil pour recevoir une dent telle que la dent 22, est mise en oeuvre dans certains pays tels que l'Allemagne.

Dans d'autres pays, tels que la France, l'alimentation des appareils de la rangée s'effectue par un peigne situé au-dessus des appareils avec chaque dent de ce peigne engagée dans un appareil par un orifice relativement étendu suivant la direction avant-arrière permettant aussi bien à une dent de peigne qu'à l'extrémité dénudée d'un câble électrique d'accéder à la borne de raccordement située sous la face supérieure 15.

L'appareil électrique 10 peut également être utilisé dans ces pays, avec une dent de peigne qui accède à la borne située sous la face supérieure 15 par l'orifice relativement étendu ménagé dans la face supérieure 15, et avec le câble électrique de départ qui accède à la borne 21 par l'orifice relativement étendu ménagé dans la face inférieure 13.

Lorsque l'appareil 10 est utilisé dans des pays tels que la France, pour démonter l'appareil 10 de la rangée d'appareils, on agit sur le talon 32 pour le faire passer en position effacée (bec 30 rétracté dans le corps de l'appareil 10) et on débloque la griffe 35 en exerçant sur la touche 38 un effort dirigé vers l'arrière.

Du fait que l'orifice ménagé dans la face supérieure 15 est dimensionné pour permettre l'accès aussi bien d'une dent de peigne que de l'extrémité dénudée d'un câble électrique, cet orifice est bien plus étendu suivant la direction avant-arrière que l'épaisseur d'une dent de peigne.

L'extension relativement importante de cet orifice permet, lorsque le talon 32 est en position effacée et que la borne de raccordement située sous la face supérieure 15 a été desserrée, d'incliner l'appareil 10 jusqu'à ce que l'aile supérieure 27 soit hors de l'échancrure 16.

Si le câble électrique raccordé à la borne 21 a précédemment été enlevé, il est alors possible d'abaisser l'appareil électrique 10 pour le dégager de la dent du peigne situé au-dessus des appareils de la rangée et pour le dégager de l'aile 28, de sorte que l'appareil électrique 10 est alors libéré de ce peigne et du rail 20.

On va maintenant décrire l'appareil 10 illustré sur la figure 3.

Cet appareil 10 est semblable à l'appareil 10 illustré sur les figures 1 et 2, si ce n'est qu'il est quatre fois plus large (largeur de quatre modules) avec quatre bornes de raccordement situées au-dessus de la face inférieure 13 et quatre bornes de raccordement situées sous la face supérieure 15, qu'il comporte deux griffes de fixation 35 chacune située à proximité d'une respective des faces principales 11 et qu'il comporte deux talons 32 chacun situé à proximité d'une respective des faces principales 11.

L'appareil 10 illustré sur la figure 3 est ici un interrupteur différentiel triphasé et le peigne d'alimentation 23 illustré sur la figure 3 est un peigne tétrapolaire (un pôle de neutre et trois pôles de phase). Les dents 22 du peigne tétrapolaire 23 sont successivement aux différents pôles de l'installation électrique (pôle de neutre, pôle de phase 1, pôle de phase 2, pôle de phase 3, pôle de neutre et ainsi de suite).

Du fait que le peigne tétrapolaire 23 est situé en avant des touches 38 et que l'espace situé sous le peigne 23 est en général occupé par une paroi de l'enveloppe dans laquelle est disposé l'appareil 10 ou occupé par des câbles électriques se raccordant aux appareils d'une rangée située sous la rangée à laquelle appartient l'appareil 10, l'opérateur qui doit appuyer sur les touches 38 doit se servir d'un outil à tige allongée tel que le tournevis 50 montré sur la figure 3.

L'appareil 10 illustré sur la figure 3 étant plus large que les touches 38 (qui ont une largeur un peu inférieure à un module), la localisation par l'opérateur des touches 38, masquées au moins partiellement par le peigne tétrapolaire 23, n'est pas aisée.

Dans le cas où l'appareil 10 est alimenté par un peigne tétrapolaire situé au-dessus, une difficulté semblable existe pour accéder à l'un et l'autre des talons 32, et plus précisément à la patte de manoeuvre 29 de chaque talon qui saille au-dessus de la face supérieure 15, pour faire passer chaque talon à sa position effacée (bec 30 rétracté dans le corps de l'appareil).

On va maintenant décrire l'appareil 10 illustré sur les figures 4 à 7.

Cet appareil 10 est identique à l'appareil 10 illustré sur la figure 3, si ce n'est les mesures décrites ci-après pour guider l'outil tel que le tournevis 50, et plus précisément l'extrémité de la tige allongée de cet outil.

Le corps de l'appareil 10 illustré sur les figures 4 à 7 comporte, en saillie de la face inférieure 13, une cloison d'interception 51 qui s'étend dans le sens de la largeur, c'est-à-dire selon la direction gauche-droite, entre deux extrémités 52 chacune située en avant d'une respective des touches 38, au droit de son bord latéral qui est tourné vers la cloison 51.

Ainsi, l'extrémité 52 située à gauche est au droit du bord latéral droit de la touche 38 de gauche ; et l'extrémité 52 située à droite est au droit du bord latéral gauche de la touche 38 de droite.

A chaque extrémité 52, la cloison d'interception 51 se raccorde à une cloison de calage 53, qui s'étend dans le sens de la profondeur, c'est-à-dire selon la direction avant-arrière, jusqu'à la touche 38 correspondante, dans la position qu'elle occupe lorsque la griffe 35 est en position de service (position illustrée sur les figures 4 et 5).

Ici, la cloison d'interception 51 est continue entre les extrémités 52.

A chaque extrémité 52, la zone où la cloison d'interception 51 se raccorde à la cloison de calage 53 correspondante est arrondie.

La cloison d'interception 51 et les cloisons de calage 53 ont une hauteur semblable à la hauteur de la touche 38 dans la position qu'elle occupe lorsque la griffe 35 est en position de service.

En outre de la cloison d'interception 51 et des cloisons de calage 53, le corps de l'appareil 10 illustré sur les figures 4 à 7 comporte, en saillie de la face inférieure 13, en regard de chaque cloison de calage 53, une cloison de calage 54 qui s'étend vers l'avant, à partir du bord latéral de la touche 38 qui est opposé à la cloison d'interception 51, jusqu'à une extrémité 55 au droit de l'extrémité 52.

Ici, chaque cloison de calage 54 se raccorde, par son extrémité 55, à une cloison d'interception 56 s'étendant dans le sens de la largeur, c'est-à-dire selon la direction gauche-droite, jusqu'à la face principale 11 située de son côté.

Ainsi, pour la cloison d'interception 56 de gauche, l'extrémité 55 commune à la cloison de calage 54 et à la cloison d'interception 56, est au droit du bord latéral gauche de la touche 38 de gauche ; et pour la cloison 56 de droite, l'extrémité 55 est au droit du bord latéral droit de la touche 38 de droite.

A chaque extrémité 55, la zone où la cloison de calage 54 se raccorde à la cloison d'interception 56 correspondante est arrondie.

Les cloisons de calage 54 et d'interception 56 ont une hauteur semblable à la hauteur de la touche 38 dans la position qu'elle occupe lorsque la griffe 35 est en position de service.

Pour chacune des touches 38, les cloisons de calage 53 et 54 sont disposées de part et d'autre de la touche 38, en s'étendant vers l'avant à partir d'un bord latéral respectif.

Ici, la traverse arrière 39 du chariot 36 a une section en U de sorte qu'elle présente un tronçon de fond 57 et deux tronçons latéraux 58.

Lorsque la griffe 35 est en position de service, les tronçons latéraux 58 de la traverse inférieure 39 sont chacun alignés avec une respective des cloisons de calage 53 et 54.

On observera que les cloisons d'interception 51 et 56 sont en arrière des orifices d'accès aux bornes 21 situés au-dessus de la face inférieure 13 ; et qu'en particulier les cloisons d'interception 51 et 56 sont en arrière des orifices 19.

On notera que, du fait que c'est ici un peigne 23 qui est connecté aux bornes 21, les orifices 19 ne sont pas utilisés. Lors du serrage de chaque borne 21, un masque 60 obture progressivement l'orifice 19. Ainsi, dans la configuration illustrée sur les figures 4 et 5, la borne située au-dessus du deuxième orifice 19 à partir de la gauche n'est pas serrée tandis que les autres bornes le sont (masques 60 obturant les orifices 19).

En pratique, comme expliqué ci-dessus, lorsque l'on souhaite enlever l'appareil 10, chacune des bornes 21 est desserrée afin de libérer les dents 22 du peigne 23.

Ainsi qu'expliqué ci-dessus, du fait de la présence du peigne 23, l'opérateur qui doit appuyer sur les touches 38 doit se servir d'un outil à tige allongée tel que le tournevis 50.

Dans le cas où la tige allongée de l'outil tel que le tournevis 50 n'est pas directement en face d'une touche 38, l'extrémité de cette tige va venir à la rencontre de la cloison d'interception 51, voire de l'une des cloisons d'interception 56.

Si l'utilisateur n'a pas réalisé que l'extrémité de l'outil tel que le tournevis 50 n'est pas en contact avec une touche 38, il constatera que l'effort d'appui qu'il exerce ne produit aucun déplacement et comprendra que c'est avec une cloison d'interception qu'il est en contact.

L'utilisateur fera alors glisser l'extrémité de l'outil tel que le tournevis 50 le long de la cloison d'interception 51 (voire le long de l'une des cloisons d'interception 56) pour venir à la rencontre de la touche 38.

Les cloisons de calage 53 et 54 terminent de guider l'outil vers la touche 38.

Les cloisons de calage 53 et 54 permettent d'éviter que l'extrémité de l'outil tel que 50 s'échappe d'un côté ou de l'autre de la touche 38.

Lorsque la touche 38 se déplace vers l'arrière, sous l'effet de l'effort d'appui qui est exercé par l'extrémité de l'outil tel que le tournevis 50, les tronçons latéraux 58 de la traverse 39 du chariot 35 évitent à leur tour que l'extrémité de l'outil tel que le tournevis 50 s'échappe d'un côté ou de l'autre de la touche 38.

Une fois que la griffe 35 est débloquée par appui sur la touche 38, l'outil tel que le tournevis 50 est utilisé pour abaisser la griffe 35 afin de la faire passer dans la position abaissée (figure 2).

On observera que la tranche inférieure de la touche 38 et la tranche inférieure du tronçon de fond 57 de la traverse 39, présentent en leur centre respectivement une encoche incurvée 61 et une encoche incurvée 62.

Les encoches 61 et 62 servent à caler l'extrémité de l'outil tel que le tournevis 50 lorsque cet outil est utilisé pour élever la griffe 35 afin de la faire passer de la position effacée à la position de service.

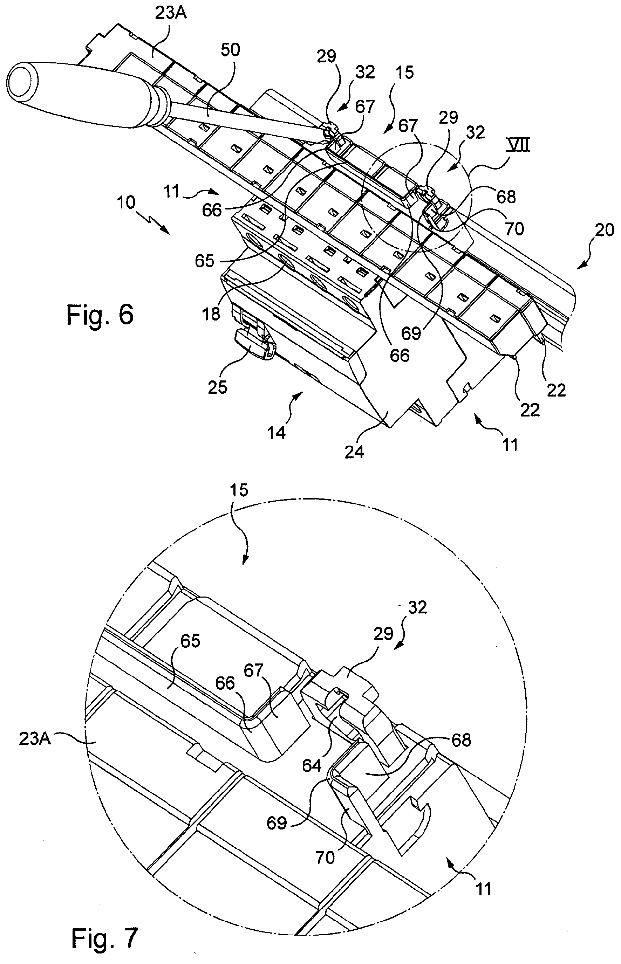

Les figures 6 et 7 montrent l'appareil 10 illustré sur les figures 4 et 5 dans une configuration où l'alimentation des appareils de la rangée s'effectue non pas par un peigne 23 situé sous les appareils, mais par un peigne 23A situé au-dessus des appareils (pays tels que la France).

Pour guider l'outil tel que le tournevis 50 vers l'une ou l'autre des pattes de manoeuvre 29, et plus précisément vers une ouverture ou empreinte 64 (figure 7) que comporte chaque patte 29 pour recevoir l'extrémité de l'outil, le corps de l'appareil 10 comporte, en saillie de la face supérieure 15, une cloison d'interception 65 qui s'étend dans le sens de la largeur, c'est-à-dire selon la direction gauche-droite, entre deux extrémités 66 chacune située en avant d'une respective des pattes 29, au droit de son bord latéral qui est tourné vers la cloison 65.

Ainsi, l'extrémité 66 située à gauche est au droit du bord latéral droit de la patte 29 de gauche ; et l'extrémité 66 située à droite est au droit du bord latéral gauche de la patte 29 de droite.

A chaque extrémité 66, la cloison d'interception 65 se raccorde à une cloison de calage 67, qui s'étend dans le sens de la profondeur, c'est-à-dire selon la direction avant-arrière, jusqu'à la patte 29 correspondante.

Ici, la cloison d'interception 65 est continue entre les extrémités 66.

A chaque extrémité 66, la zone où la cloison d'interception 65 se raccorde à la cloison de calage 67 correspondante est arrondie.

La cloison d'interception 65 et les cloisons de calage 67 ont une hauteur semblable à la hauteur de la patte 29 lorsque le talon 32 est en position de service.

En outre de la cloison d'interception 65 et des cloisons de calage 67, le corps de l'appareil 10 illustré sur les figures 4 à 7 comporte, en saillie de la face supérieure 15, en regard de chaque cloison de calage 67, une cloison de calage 68 qui s'étend vers l'avant, à partir du bord latéral de la patte 29 qui est opposé à la cloison d'interception 51, jusqu'à une extrémité 69 au droit de l'extrémité 66.

Ici, chaque cloison de calage 68 se raccorde, par son extrémité 69, à une cloison d'interception 70 s'étendant dans le sens de la largeur, c'est-à-dire selon la direction gauche-droite, jusqu'à la face principale 11 située de son côté.

Ainsi, pour la cloison d'interception 70 de gauche, l'extrémité 69 commune à la cloison de calage 68 et à la cloison d'interception 70, est au droit du bord latéral gauche de la patte 29 de gauche ; et pour la cloison 70 de droite, l'extrémité 69 est au droit du bord latéral droit de la patte 29 de droite.

A chaque extrémité 69, la zone où la cloison de calage 68 se raccorde à la cloison d'interception 70 correspondante est arrondie.

Les cloisons de calage 68 et d'interception 70 ont une hauteur semblable à la hauteur de la patte 29 lorsque le talon 32 est en position de service.

Pour chacune des pattes 29, les cloisons de calage 67 et 68 sont disposées de part et d'autre de la patte 29, en s'étendant vers l'avant à partir d'un bord latéral respectif.

On notera que les cloisons d'interception 65 et 70 sont en arrière des orifices d'accès aux bornes situées sous la face supérieure 15.

Comme expliqué ci-dessus, lorsque l'on souhaite enlever l'appareil 10, chacune des bornes situées sous la face supérieure 15 est desserrée afin de libérer les dents 22 du peigne 23A.

Dans le cas où la tige allongée de l'outil tel que le tournevis 50 n'est pas directement en face d'une patte 29, l'extrémité de cette tige va venir à la rencontre de la cloison d'interception 65, voire de l'une des cloisons d'interception 70.

Si l'utilisateur n'a pas réalisé que l'extrémité de l'outil tel que le tournevis 50 n'est pas en contact avec une patte 29 (engagement dans l'ouverture ou empreinte 64), il constatera qu'il ne rencontre pas de résistance à l'entraînement vers le haut et comprendra que c'est avec une cloison d'interception qu'il est en contact.

L'utilisateur fera alors glisser l'extrémité de l'outil tel que le tournevis 50 le long de la cloison d'interception 65 (voire le long de l'une des cloisons d'interception 70) pour venir à la rencontre de la patte 29.

Les cloisons de calage 67 et 68 terminent de guider l'outil vers la patte 29, et plus précisément vers l'ouverture ou empreinte 64 de cette patte.

Les cloisons de calage 67 et 68 permettent d'éviter que l'extrémité de l'outil tel que 50 s'échappe d'un côté ou de l'autre de la patte 29.

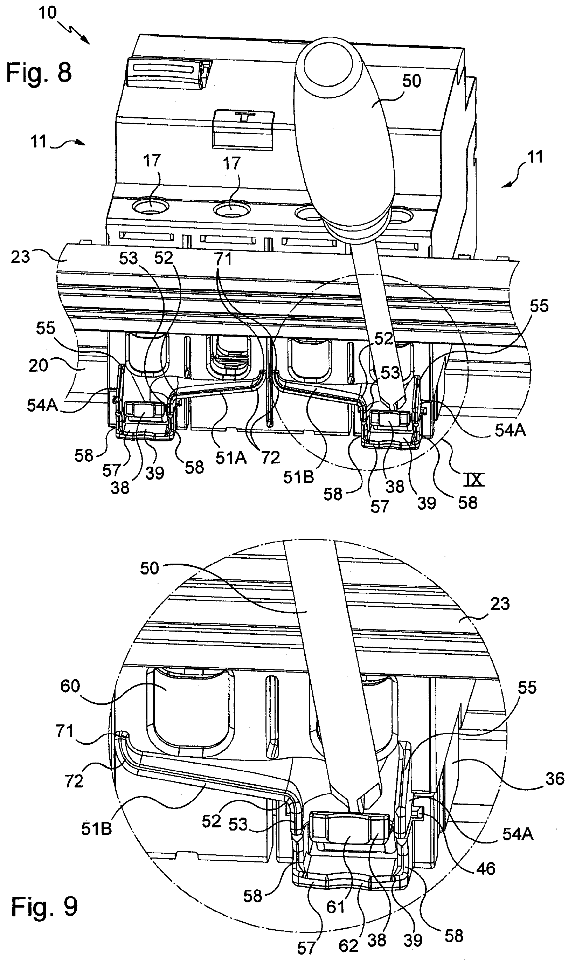

On va maintenant décrire l'appareil 10 illustré sur les figures 8 à 11.

Cet appareil 10 est identique à l'appareil illustré sur les figures 4 à 7, si ce n'est les détails de conformation des cloisons d'interception et des cloisons de calage.

En ce qui concerne la face inférieure 13 (figures 8 et 9), il n'y a pas une unique cloison d'interception 51 continue entre les extrémités 52, mais deux cloisons d'interception disjointes 51A et 51 B situées respectivement à gauche et à droite d'une interruption centrale.

Chacune des cloisons d'interception 51A et 51 B s'étend de l'extrémité 52 située en avant de la touche 38 correspondante, au droit de son bord latéral qui est tourné vers la cloison 51A ou 51 B correspondante, jusqu'à une extrémité 71 délimitant l'interruption centrale.

Ici, les cloisons 51A et 51B ne sont pas orientées strictement dans le sens de la largeur, c'est-à-dire strictement selon la direction gauche-droite, mais avec une inclinaison vers l'arrière et vers la touche 38 située du même côté.

En d'autres termes, l'inclinaison des parois d'interception 51A et 51 B est telle que l'extrémité 71 située du côté de l'interruption centrale est plus en avant que l'extrémité 52 située du côté de la touche 38 correspondante.

A proximité de l'extrémité 71, chacune des parois d'interception 51A et 51 B comporte un retour 72 incurvé vers l'avant.

Grâce à l'inclinaison des cloisons d'interception 51A et 51 B, plus l'extrémité de l'outil tel que le tournevis 50 est éloignée de la touche 38, plus la rencontre avec la cloison 51A ou 51 B se fera en avant. Cela facilite l'identification par l'opérateur que c'est avec une des cloisons d'interception qu'il est entré en contact.

Les retours 72 facilitent la sélection entre la cloison d'interception 51A et la cloison d'interception 51 B.

La cloison de calage 54 et la cloison d'interception 56 sont remplacées par une cloison de calage 54A qui s'étend davantage vers l'avant. En l'occurrence, ici, l'extrémité 55 de la cloison de calage 54 est au droit de l'extrémité 71 des cloisons d'interception 51A et 51 B.

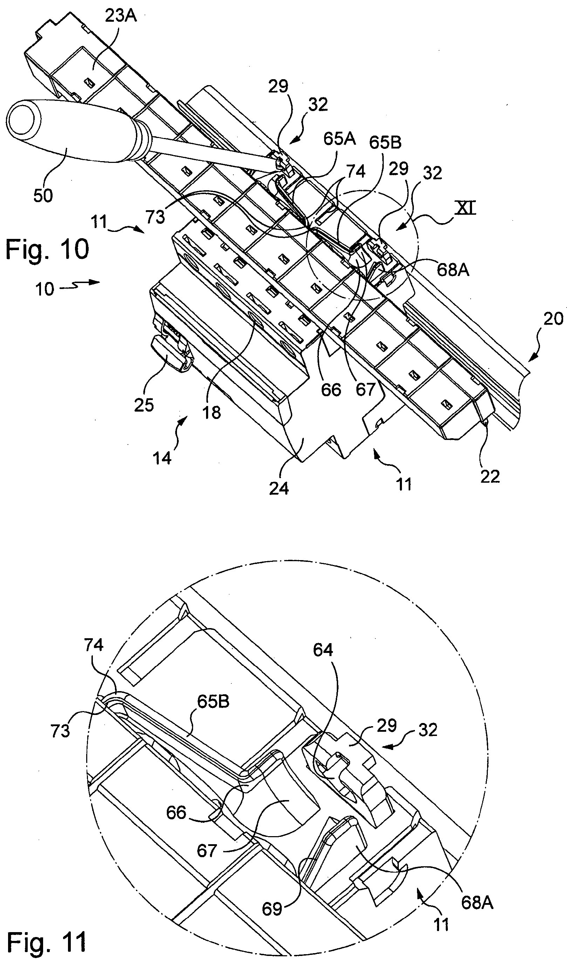

En ce qui concerne la face supérieure 15 (figures 10 et 11), il n'y a pas une unique cloison d'interception 65 continue entre les extrémités 66 mais deux cloisons d'interception disjointes 65A et 65B situées respectivement à gauche et à droite d'une interruption centrale.

Chacune des cloisons d'interception 65A et 65B s'étend de l'extrémité 66 située en avant de la patte 29 correspondante, au droit de son bord latéral et qui est tourné vers la cloison 65A ou 65B correspondante, jusqu'à une extrémité 73 délimitant l'interruption centrale.

Ici, les cloisons 65A et 65B ne sont pas orientées strictement dans le sens de la largeur, c'est-à-dire strictement selon la direction gauche-droite, mais avec une inclinaison vers l'arrière et vers la patte 29 située du même côté.

En d'autres termes, l'inclinaison des parois d'interception 65A et 65B est telle que l'extrémité 73 située du côté de l'interruption centrale est plus en avant que l'extrémité 66 située du côté de la patte 29 correspondante.

A proximité de l'extrémité 73, chacune des parois d'interception 65A et 65B comporte un retour 74 incurvé vers l'avant.

Grâce à l'inclinaison des cloisons d'interception 65A et 65B, plus l'extrémité de l'outil tel que le tournevis 50 est éloignée de la patte 29, plus la rencontre avec la cloison 65A ou 65B se fera en avant. Cela facilite l'identification par l'opérateur que c'est avec une des cloisons d'interception qu'il est entré en contact.

Les retours 74 facilitent la sélection entre la cloison d'interception 65A et la cloison d'interception 65B.

La cloison de calage 68 et la cloison d'interception 70 sont remplacées par une cloison de calage 68A qui s'étend davantage vers l'avant. En l'occurrence, ici, l'extrémité 69 de la cloison de calage 68A est au droit de l'extrémité 73 des cloisons d'interception 65A et 65B.

On observera que chacune des cloisons d'interception 51, 51A, 51B, 65, 65A et 65B est plus large que la touche 38 ou la patte 29 en avant de laquelle se trouve son extrémité.

Dans une variante non illustrée, prévue par exemple pour être utilisée exclusivement dans des pays où le peigne de distribution d'énergie électrique est disposé en haut des appareils, la griffe effaçable 35 est remplacée par une griffe rétractable, c'est-à-dire formée par un coulisseau directement monté sur le corps de l'appareil 10, sollicité par un ressort vers une position de service où le bec 31 est saillant, ce coulisseau présentant en saillie de la face inférieure 13 une patte de manoeuvre semblable à la patte de manoeuvre 29 pour entraîner le coulisseau dans une position effacée où le bec 31 est rétracté dans le corps de l'appareil 10. Dans cette variante, c'est la patte de manoeuvre (portion du coulisseau en saillie de la face inférieure 13) qui sert de membre de manoeuvre pour abaisser le bec inférieur 31 afin de libérer l'appareil 10 du rail 20. Dans d'autres variantes non illustrées, les membres de manoeuvre en saillie de la face inférieure 13 sont différents de la touche 38 ou de la patte de manoeuvre d'un coulisseau directement monté sur le corps 10.

Dans une variante non illustrée, le nombre et l'emplacement des cloisons d'interception et des cloisons de calage est différent, avec par exemple, pour chaque membre de manoeuvre que forment les pattes 29 et les touches 38, uniquement une cloison d'interception s'étendant en avant du membre de manoeuvre correspondant au droit de son bord latéral qui est du côté de la cloison d'interception.

Dans les modes de réalisation illustrés, il y a deux membres de manoeuvre en saillie de la face inférieure 13 et deux membres de manoeuvre en saillie de la face supérieure 15 avec chaque membre de manoeuvre qui est à proximité d'une face principale 11, les membres de manoeuvre en saillie de la face inférieure 13 servant chacun à abaisser un bec inférieur 31 tandis que les membres de manoeuvre en saillie de la face supérieure 15 servent chacun à élever un bec supérieur 30. Dans des variantes non illustrées, le nombre et l'emplacement des membres de manoeuvre est différent, avec par exemple :
- aucun membre de manoeuvre en saillie de la face supérieure 15, le ou les bec(s) supérieur(s) 30 étant fixe(s) ; ou bien aucun membre de manoeuvre en saillie de la face inférieure 13 ;
- un seul membre de commande en saillie de la face supérieure 15 ;
- un seul membre de commande en saillie de la face inférieure 13 ; et/ou
- un ou plusieurs membres de commande à l'écart de chacune des faces principales 11, par exemple à mi-distance ou à un autre emplacement.

Dans d'autres variantes non illustrées, l'appareil n'est pas un interrupteur différentiel mais un autre appareil modulaire, par exemple un disjoncteur triphasé ou un appareil autre qu'un appareil de protection, par exemple un télérupteur.

De nombreuses autres variantes sont possibles en fonction des circonstances, et l'on rappelle à cet égard que l'invention ne se limite pas aux exemples décrits et représentés.

## Revendications

1. Appareil électrique à fixer par encliquetage sur un rail de support horizontal (20) présentant une aile supérieure (27) et une aile inférieure (28), lequel appareil (10) a une forme globalement parallélépipédique avec deux faces principales (11) et des faces latérales s'étendant de l'une à l'autre des faces principales (11), respectivement une face arrière (12), une face inférieure (13), une face avant (14) et une face supérieure (15), ladite face arrière (12) présentant un bec supérieur (30) et un bec inférieur (31) en regard l'un de l'autre, ledit appareil (10) étant configuré pour être fixé audit rail (20) avec ladite aile supérieure (27) engagée entre le bec supérieur (30) et le corps de l'appareil (10) et avec ladite aile inférieure (28) engagée entre le bec inférieur (31) et le corps de l'appareil (10), ledit bec inférieur (31) étant élastiquement rétractable pour permettre la fixation de l'appareil (10) sur le rail (20) par encliquetage, au moins un desdits bec supérieur (30) et bec inférieur (31) étant associé à un membre de manoeuvre (29, 38) en saillie de la face latérale supérieure (15) ou inférieure (13) correspondante pour élever le bec supérieur (30) ou abaisser le bec inférieur (31) afin de libérer ledit appareil (10) dudit rail (20) ; **caractérisé en ce que** le corps dudit appareil (10) comporte une cloison d'interception (51, 56, 65, 70 ; 51A, 51 B, 65A, 65B) en saillie de ladite face latérale correspondante (15, 13), s'étendant dans le sens de la largeur, c'est-à-dire suivant la direction gauche-droite, jusqu'à une extrémité (52, 55, 66, 69) située en avant du membre de manoeuvre (29, 38) au droit du bord latéral du membre de manoeuvre (29, 38), c'est-à-dire le bord gauche ou le bord droit, qui est du côté de la cloison d'interception (51, 56, 65, 70 ; 51A, 51B, 65A, 65B), grâce à quoi la cloison d'interception (51, 56, 65, 70 ; 51A, 51B, 65A, 65B) peut guider vers le membre de manoeuvre (29, 38) un outil d'entraînement (50) du membre de manoeuvre (29, 38), par glissement de l'extrémité de l'outil le long de la cloison d'interception.

2. Appareil selon la revendication 1, **caractérisé en ce que** ladite cloison d'interception (51, 65 ; 51A, 51 B, 65A, 65B) est au moins aussi large que ledit membre de manoeuvre (29, 38).

3. Appareil selon l'une quelconque des revendications 1 ou 2, **caractérisé en ce que** ladite cloison d'interception (51, 56, 65, 70 ; 51A, 51 B, 65A, 65B) a une hauteur semblable à la hauteur dudit membre de manoeuvre (29, 38).

4. Appareil selon l'une quelconque des revendications 1 à 3, **caractérisé en ce que** ladite cloison d'interception (51, 56, 65, 70; 51A, 51B, 65A, 65B) est en arrière de chaque orifice d'accès (19) à une borne de raccordement (21) que présente ladite face latérale correspondante (15, 13).

5. Appareil selon l'une quelconque des revendications 1 à 4, **caractérisé en ce que** ladite cloison d'interception (51, 56, 65, 70 ; 51A, 51B, 65A, 65B) se raccorde, par ladite extrémité (52, 55, 66, 69), à une cloison de calage (53, 54, 67, 68; 53, 54A, 67, 68A) qui s'étend dans le sens de la profondeur jusqu'audit membre de manoeuvre (29, 38).

6. Appareil selon la revendication 5, caractérisé en ce le corps dudit appareil (10) comporte, en saillie de ladite face latérale correspondante (15, 13), en regard de ladite cloison de calage (53, 67), une autre cloison de calage (54, 68 ; 54A, 68A) qui s'étend vers l'avant, à partir d'un bord latéral opposé dudit membre de commande (29, 38).

7. Appareil selon la revendication 6, **caractérisé en ce que** ledit membre de manoeuvre (29, 38) est disposé au voisinage de l'une desdites faces principales (11), avec ladite autre cloison de calage (54, 68 ; 54A, 68A) disposée du côté de cette face principale (11).

8. Appareil selon l'une quelconque des revendications 1 à 7, **caractérisé en ce qu'**il comporte deux dits becs supérieurs (30) ou deux dits becs inférieurs (31) chacun associé à un dit membre de manoeuvre (29, 38), chaque dit membre de manoeuvre (29, 38) étant disposé au voisinage d'une respective desdites faces principales (11).

9. Appareil selon la revendication 8, **caractérisé en ce qu'**il comporte une dite cloison d'interception (51, 65) unique et continue entre deux dites extrémités (52, 66).

10. Appareil selon la revendication 8, **caractérisé en ce qu'**il comporte deux dites cloisons d'interception (51A, 51 B, 65A, 65B) disjointes situées respectivement à gauche et à droite d'une interruption centrale, chaque dite cloison d'interception (51A, 51 B, 65A, 65B) s'étendant de l'interruption centrale jusqu'à une respective dite extrémité (52, 66).

11. Appareil selon la revendication 10, **caractérisé en ce que** chaque dite cloison d'interception disjointe (51, 51 B, 65A, 65B) est orientée dans le sens de la largeur avec une inclinaison vers l'arrière et vers le membre de manoeuvre (29, 38) situé du même côté.

12. Appareil selon l'une quelconque des revendications 1 à 11, **caractérisé en ce que** ledit membre de manoeuvre est une patte de manoeuvre (29) présentant une ouverture ou empreinte (64) pour recevoir ledit outil (50) afin que ladite patte de manoeuvre soit entraînée vers le haut ou vers le bas.

13. Appareil selon l'une quelconque des revendications 1 à 11, **caractérisé en ce que** ledit membre de manoeuvre est une touche (38) configurée pour être entraînée vers l'arrière par appui dudit outil (50).

14. Appareil selon la revendication 13, **caractérisé en ce que** ladite touche (38) appartient à une griffe (35) présentant en arrière de ladite touche (38) une traverse (39) à section en U.

15. Appareil selon l'une quelconque des revendications 1 à 14, **caractérisé en ce qu'**il comporte deux dits becs supérieurs (30) et deux dits becs inférieurs (31) chacun associé à un dit membre de manoeuvre (29, 38).

## Patentansprüche

1. I nstallationsgerät zum Befestigen durch Einrasten auf einer einen oberen Schenkel (27) und einen unteren Schenkel (28) aufweisenden horizontalen Tragschiene (20), wobei das Gerät (10) eine allgemein parallelepipedische Form hat mit zwei Stirnseiten (11) und von der einen zur anderen Stirnseite (11) verlaufenden Seitenflächen, nämlich einer Rückseite (12), einer Unterseite (13), einer Vorderseite (14) und einer Oberseite (15), wobei die Rückseite (12) eine obere Nase (30) und eine untere Nase (31) aufweist, die einander gegenüberliegen, wobei das Gerät (10) dazu ausgebildet ist, mit dem zwischen der oberen Nase (30) und dem Körper des Geräts (10) eingesteckten oberen Schenkel (27) und dem zwischen der unteren Nase (31) und dem Körper des Geräts (10) eingesteckten unteren Schenkel (28) an der Schiene (20) befestigt zu werden, wobei die untere Nase (31) elastisch einschiebbar ist, um die Befestigung des Geräts (10) auf der Schiene (20) durch Einrasten zu ermöglichen, wobei wenigstens eine der oberen (30) und der unteren (31) Nase einem aus der entsprechenden oberen (15) oder unteren (13) Seitenfläche vorstehenden Bedienelement (29, 38) zugeordnet ist, um die obere Nase (30) anzuheben oder die untere Nase (31) abzusenken, um das Gerät (10) von der Schiene (20) zu lösen;
**dadurch gekennzeichnet, dass** der Körper des Geräts (10) eine an der entsprechenden Seitenfläche (15, 13) vorstehende Auffangwand (51, 56, 65, 70; 51 A, 51 B, 65A, 65B) aufweist, die in der Breite, das heißt von links nach rechts, bis zu einem Ende (52, 55, 66, 69) verläuft, das vor dem Bedienelement (29, 38) senkrecht zum Seitenrand des Bedienelements (29, 38), das heißt zum linken Rand oder zum rechten Rand, angeordnet ist, der sich auf der Seite der Auffangwand (51, 56, 65, 70; 51 A, 51 B, 65A, 65B) befindet, wodurch die Auffangwand (51, 56, 65, 70; 51 A, 51 B, 65A, 65B) ein Werkzeug (50) zur Mitnahme des Bedienelements (29, 38) durch Gleiten des Werkzeugendes entlang der Auffangwand zu dem Bedienelement (29, 38) führen kann.

2. Gerät nach Anspruch 1,
**dadurch gekennzeichnet, dass** die Auffangwand (51, 65; 51 A, 51 B, 65A, 65B) wenigstens genauso breit ist wie das Bedienelement (29, 38).

3. Gerät nach einem der Ansprüche 1 oder 2,
**dadurch gekennzeichnet, dass** die Auffangwand (51, 56, 65, 70; 51 A, 51 B, 65A, 65B) eine ähnliche Höhe hat wie die Höhe des Bedienelements (29, 38).

4. Gerät nach einem der Ansprüche 1 bis 3,
**dadurch gekennzeichnet, dass** die Auffangwand (51, 56, 65, 70; 51 A, 51 B, 65A, 65B) hinter jeder Zugangsöffnung (19) zu einer Anschlussklemme (21) liegt, die die entsprechende Seitenfläche (15, 13) aufweist.

5. Gerät nach einem der Ansprüche 1 bis 4,
**dadurch gekennzeichnet, dass** die Auffangwand (51, 56, 65, 70; 51 A, 51 B, 65A, 65B) durch das Ende (52, 55, 66, 69) mit einer Klemmwand (53, 54, 67, 68; 53, 54A, 67, 68A) verbunden ist, die in der Tiefe bis zu dem Bedienelement (29, 38) verläuft.

6. Gerät nach Anspruch 5,
**dadurch gekennzeichnet, dass** der Körper des Geräts (10) an der entsprechenden Seitenfläche (15, 13) vorstehend der Klemmwand (53, 67) gegenüberliegend eine weitere Klemmwand (54, 68; 54A, 68A) umfasst, die sich, ausgehend von einem entgegengesetzten Seitenrand des Bedienelements (29, 38), nach vorne erstreckt.

7. Gerät nach Anspruch 6,
**dadurch gekennzeichnet, dass** das Bedienelement (29, 38) in der Nähe einer der Stirnseiten (11) angeordnet ist, wobei die andere Klemmwand (54, 68; 54A, 68A) auf der Seite dieser Stirnseite (11) angeordnet ist.

8. Gerät nach einem der Ansprüche 1 bis 7,
**dadurch gekennzeichnet, dass** es zwei obere Nasen (30) oder zwei untere Nasen (31) umfasst, die jeweils einem Bedienelement (29, 38) zugeordnet sind, wobei jedes Bedienelement (29, 38) in der Nähe einer jeweiligen Stirnseite (11) angeordnet ist.

9. Gerät nach Anspruch 8,
**dadurch gekennzeichnet, dass** es eine einzige und zwischen zwei Enden (52, 66) kontinuierlich verlaufende Auffangwand (51, 65) umfasst.

10. Gerät nach Anspruch 8,
**dadurch gekennzeichnet, dass** es zwei getrennte Auffangwände (51 A, 51 B, 65A, 65B) umfasst, die links bzw.rechts einer mittigen Unterbrechung angeordnet sind, wobei sich jede Auffangwand (51, 51 B, 65A, 65B) von der mittigen Unterbrechung aus bis zu einem jeweiligen Ende (52, 66) erstreckt.

11. Gerät nach Anspruch 10,
**dadurch gekennzeichnet, dass** jede getrennte Auffangwand (51, 51 B, 65A, 65B) in der Breite ausgerichtet ist, mit einer Neigung nach hinten und in Richtung des auf der gleichen Seite angeordneten Bedienelements (29, 38).

12. Gerät nach einem der Ansprüche 1 bis 11,
**dadurch gekennzeichnet, dass** das Bedienelement eine Bedienlasche (29) ist, mit einer Öffnung oder Vertiefung (64) zur Aufnahme des Werkzeugs (50), damit die Bedienlasche nach oben oder nach unten bewegt werden kann.

13. Gerät nach einem der Ansprüche 1 bis 11,
**dadurch gekennzeichnet, dass** das Bedienelement eine Taste (38) ist, die dazu ausgebildet ist, durch Auflegen des Werkzeugs (50) nach hinten bewegt zu werden.

14. Gerät nach Anspruch 13,
**dadurch gekennzeichnet, dass** die Taste (38) zu einer Klaue (35) gehört, die hinter der Taste (38) eine Querstrebe (39) mit U-förmigem Querschnitt aufweist.

15. Gerät nach einem der Ansprüche 1 bis 14,
**dadurch gekennzeichnet, dass** es zwei obere Nasen (30) und zwei untere Nasen (31) aufweist, die jeweils einem Bedienelement (29, 38) zugeordnet sind.

## Claims

1. Electrical appliance to be snap-fitted to a horizontal support rail (20) having an upper flange (27) and a lower flange (28), which appliance (10) has an overall parallelepiped shape having two main faces (11) and lateral faces extending from one to the other of the main faces (11), a rear face (12), a lower face (13), a front face (14) and an upper face (15), respectively, said rear face (12) having an upper nose (30) and a lower nose (31) opposite the other nose, said appliance (10) being configured to be attached to said rail (20) with said upper flange (27) engages between the upper nose (30) and the body of the appliance (10) and said lower flange (28) engages between the lower nose (31) and the body of the appliance (10), said lower nose (31) being resiliently retractable in order for the appliance (10) to be snap-fitted to the rail (20), at least one of said upper nose (30) and lower nose (31) being associated to a movement member (29, 38) projecting from the corresponding upper lateral face (15) or lower lateral face (13) in order to raise the upper nose (30) or lower the lower nose (31) in order to release said appliance (10) from said rail (20), **characterised in that** the body of said appliance (10) comprises an intercepting partition (51, 56, 65, 70; 51 A, 51 B, 65A, 65B) projecting from said corresponding lateral face (15, 13) and extending in the width direction, that is to say in the left-to-right direction, as far as an end (52, 55, 66, 69) situated in front of the movement member (29, 38) in line with the lateral edge of the movement member (29, 38), that is to say the left-hand edge or the right-hand edge, which is at the side of the intercepting partition (51, 56, 65, 70; 51 A, 51 B, 65A, 65B), as a result of which the intercepting partition (51, 56, 65, 70; 51 A, 51 B, 65A, 65B) may guide a driving tool (50) of the movement member (29, 38) towards the movement member (29, 38) by sliding the end of the tool along the intercepting partition.

2. Appliance according to claim 1, **characterised in that** said intercepting partition (51, 65; 51 A, 51 B, 65A, 65B) is at least as wide as said movement member (29, 38).

3. Appliance according to either claim 1 or claim 2, **characterised in that** said intercepting partition (51, 56, 65, 70; 51 A, 51 B, 65A, 65B) is of a similar height to the height of said movement member (29, 38).

4. Appliance according to any of claims 1 to 3, **characterised in that** said intercepting partition (51, 56, 65, 70; 51 A, 51 B, 65A, 65B) is behind each opening (19) for accessing a connection terminal (21) which said corresponding lateral face (15, 13) comprises.

5. Appliance according to any of claims 1 to 4, **characterised in that** said intercepting partition (51, 56, 65, 70; 51 A, 51 B, 65A, 65B) is connected, by said end (52, 55, 66, 69), to a blocking partition (53, 54, 67, 68; 53, 54A, 67, 68A) which extends in the depth direction as far as said movement member (29, 38).

6. Appliance according to claim 5, **characterised in that** the body of said appliance (10) comprises another blocking partition (54, 68; 54A, 68A) which extends towards the front from an opposing lateral edge of said control member (29, 38) and projects from said corresponding lateral face (15, 13), opposite said blocking partition (53, 67).

7. Appliance according to claim 6, **characterised in that** said movement member (29, 38) is arranged in the vicinity of one of said main faces (11), said other blocking partition (54, 68; 54A, 68A) being arranged at the side of this main face (11).

8. Appliance according to any of claims 1 to 7, **characterised in that** it comprises two said upper noses (30) or two said lower noses (31) which are each associated to one of said movement members (29, 38), each of said movement members (29, 38) being arranged in the vicinity of a respective of said main faces (11).

9. Appliance according to claim 8, **characterised in that** it comprises a single said intercepting partition (51, 65) that is continuous between said two ends (52, 66).

10. Appliance according to claim 8, **characterised in that** it comprises two said intercepting partitions (51 A, 51 B, 65A, 65B) that are separate and are respectively located to the left and to the right of a central break, each of said intercepting partitions (51 A, 51 B, 65A, 65B) extending from the central break as far as said respective ends (52, 66).

11. Appliance according to claim 10, **characterised in that** each of said separate intercepting partitions (51, 51 B, 65A, 65B) is oriented in the width direction and is inclined towards the rear and towards the movement member (29, 38) located on the same side.

12. Appliance according to any of claims 1 to 11, **characterised in that** said movement member is a movement tab (29) that has an opening or indentation (64) for receiving said tool (50) so that said movement tab is driven towards the top or towards the bottom.

13. Appliance according to any of claims 1 to 11, **characterised in that** said movement member is a button (38) configured to be driven towards the rear by force being exerted on said tool (50).

14. Appliance according to claim 13, **characterised in that** said button (38) is part of a claw (35), which has a U-shaped cross-piece (39) behind said button (38).

15. Appliance according to any of claims 1 to 14, **characterised in that** it comprises two said upper noses (30) and two said lower noses (31), which are each associated to one of said movement members (29, 38).
